# EUROPEAN PATENT APPLICATION

(11) **EP 4 836 026 A1**
(43) Date of publication of application: **04.11.2026**
(21) Application number: 24912806.7
(22) Date of filing: 24.12.2024
(51) Int. Cl.: H01M 4/70, H01G 11/70, H01M 10/04, H01M 50/533, H01M 50/536, H01M 50/548

(54) **POWER STORAGE DEVICE**

(30) Priority: 28.12.2023 JP 2023222262
(71) Applicant: PANASONIC INTELLECTUAL PROPERTY MANAGEMENT CO., LTD., Kadoma-shi, Osaka 571-0057 (JP)
(72) Inventor: SAKAMOTO, Shinichi, Kadoma-shi, Osaka 571-0057 (JP); GESHI, Shinya, Kadoma-shi, Osaka 571-0057 (JP); KOZUKI, Kiyomi, Kadoma-shi, Osaka 571-0057 (JP); SATO, Kasumi, Kadoma-shi, Osaka 571-0057 (JP); IHAMA, Masahiro, Kadoma-shi, Osaka 571-0057 (JP)
(74) Representative: Eisenführ Speiser
(86) International application number: PCT/JP2024/045676
(87) International publication number: WO 2025/142919

(57) **Abstract**

The present invention comprises: an electrode body (14) in which a first electrode (positive electrode (11)) and a second electrode (negative electrode (12)) are disposed with a separator (13) therebetween; and an exterior body (16) that accommodates the electrode body (14). The first electrode (positive electrode (11)) has a tip portion that extends beyond an end portion of the second electrode (negative electrode (12)) in a first direction. After bending, the tip portion is connected to a first current collector plate (upper current collector plate (19)). A plurality of openings are formed in the tip portion.

## Description

### TECHNICAL FIELD

The present disclosure relates to a power storage device and, for example, to a battery and a capacitor.

### BACKGROUND ART

Conventionally, a cylindrical secondary battery described in Patent Literature 1 has been known as a power storage device. The cylindrical secondary battery comprises: an electrode assembly that includes a positive electrode and a negative electrode that are wound with a separator interposed therebetween; a closed-bottom-cylindrical-shaped housing body that accommodates the electrode assembly; and a sealing assembly that blocks an opening portion of the housing body. The positive electrode of the electrode assembly is electrically coupled to a bottom surface of the sealing assembly via a positive electrode lead. The negative electrode of the electrode assembly is electrically coupled to the bottom of the housing body via a negative electrode lead.

### CITATION LIST

### PATENT LITERATURE

Patent Literature 1: US Patent Application Publication No. 2022/0278431

### SUMMARY

To further improve the capacity and output of the power storage device, and perform stable charging and discharging in a more severe environment, the reliability is required to be further improved. The present disclosure has an object to provide a highly reliable power storage device.

A power storage device according to the present disclosure comprises: an electrode assembly that includes a first electrode and a second electrode, and a separator interposed therebetween; and a housing body that accommodates the electrode assembly, wherein the first electrode includes a distal end portion that extends beyond an end portion of the second electrode in a first direction, and the distal end portion is bent and then is coupled to a first current collector plate, and a plurality of openings are formed in the distal end portion.

According to the power storage device in the present disclosure, a highly reliable power storage device may be provided.

### BRIEF DESCRIPTION OF DRAWING

FIG. 1 is a sectional view of a battery in an axial direction according to one embodiment of a power storage device in the present disclosure.
FIG. 2 shows the configuration of a distal end portion of a positive electrode.
FIG. 3 is a diagram illustrating the manner of bending forming.
FIG. 4 is a schematic diagram showing a state after an upper current collector plate is laser-welded as viewed from above.
FIG. 5 is a diagram illustrating formation of openings.
FIG. 6 shows various examples of openings.
FIG. 7 shows still another example of openings.
FIG. 8 is a flowchart showing a positive electrode manufacturing process.

### DESCRIPTION OF EMBODIMENTS

Referring to the drawings, embodiments of a power storage device according to the present disclosure are described in detail below. The power storage device in the present disclosure may be a secondary battery that includes an aqueous electrolyte, or a secondary battery that includes a non-aqueous electrolyte. The power storage device in the present disclosure may be a cylindrical battery that comprises a cylindrical (for example, closed-bottom cylindrical) housing body, a rectangular battery that comprises a rectangular housing body, or a pouch-shaped battery that comprises a housing body made of a laminated sheet. In such batteries, the cylindrical housing body, the rectangular housing body, and the laminated sheet constitute the housing bodies. Alternatively, the power storage device in the present disclosure may be a capacitor that is repeatedly charged and discharged. In the following description, an example of a cylindrical secondary battery (lithium-ion battery) that includes a uniform non-aqueous electrolyte is described as a power storage device as one embodiment. However, the power storage device in the present disclosure is not limited to this.

In cases where the following description includes a plurality of embodiments and modified examples, it is anticipated from the outset that a new embodiment is constructed by combining their characteristic portions as appropriate. In the following description, the same components are assigned the same symbols in the drawings, and redundant description is omitted. These drawings include schematic diagrams. The dimensional proportions, such as of longitudinal, lateral, and height, of the corresponding components between different drawings do not necessarily match. In the present description, a side of a sealing assembly in the axial direction (height direction) of a cylindrical battery is assumed as "upper" side, and a side of a bottom plate portion of a housing body 16 in the axial direction is assumed as "lower" side. The axial direction of the cylindrical battery matches the electrode assembly height direction. Among the configuration elements described below, configuration elements that are not described in an independent claim indicating the highest-level concept are optional configuration elements, and are not necessary configuration elements.

### "Configuration of Battery"

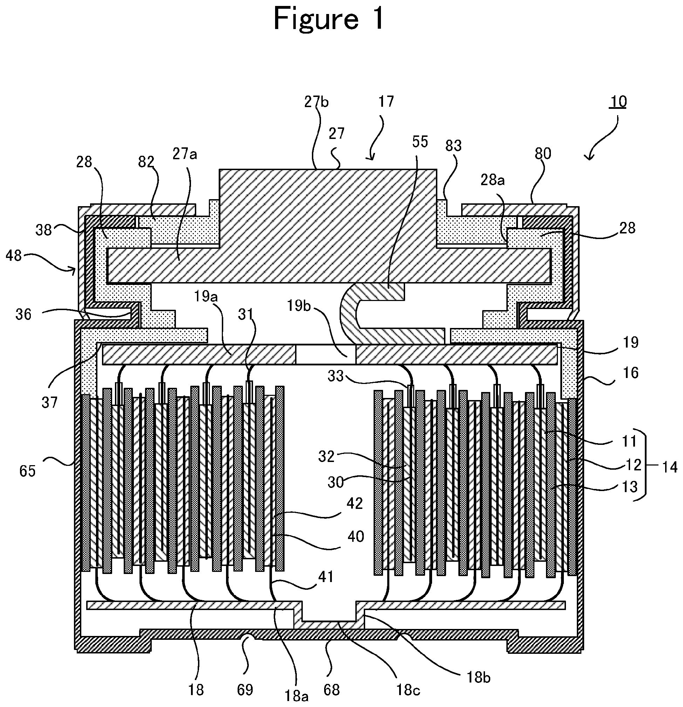

FIG. 1 is a sectional view of the battery 10 in the axial direction according to one embodiment of a power storage device in the present disclosure. The battery 10 comprises: a coiled electrode assembly 14; a non-aqueous electrolyte (not shown); a closed-bottom-cylindrical-shaped housing body 16 that is made of metal, and stores the electrode assembly 14 and the non-aqueous electrolyte; and a sealing assembly 17.

The electrode assembly 14 is a coiled electrode assembly having a coiled structure where a strip-shaped positive electrode 11 and a strip-shaped negative electrode 12 are wound together with two strip-shaped separators 13 interposed therebetween. The positive electrode constitutes a first electrode, and the negative electrode 12 constitutes a second electrode.

The non-aqueous electrolyte has ionic conductivity (e.g., lithium ion conductivity). The non-aqueous electrolyte may be a liquid electrolyte (electrolytic solution) or a solid electrolyte. The liquid electrolyte (electrolytic solution) contains a non-aqueous solvent and an electrolyte salt dissolved in the non-aqueous solvent. For example, any of esters, ethers, nitriles, amides, and a mixed solvent that contains two or more of them is used as the non-aqueous solvent. Examples of the non-aqueous solvent include ethylene carbonate (EC), ethyl methyl carbonate (EMC), dimethyl carbonate (DMC), and diethyl carbonate (DEC), and a mixed solvent thereof. The non-aqueous solvent may contain a halogen-substituted product (e.g., fluoroethylene carbonate) that is any of these solvents with at least some of their hydrogens being substituted with halogen atoms such as fluorine. For example, a lithium salt such as LiPF₆ is used as the electrolyte salt.

For example, a solid or gelatinous polymer electrolyte, or inorganic solid electrolyte is used as the solid electrolyte. The polymer electrolyte contains, for example, a lithium salt and a matrix polymer, or a non-aqueous solvent, a lithium salt, and a matrix polymer. For example, a polymer material that absorbs the non-aqueous solvent and causes it to gel is used as the matrix polymer. For example, a fluorine resin, an acrylic resin, or a polyether resin is used as the polymer material. For example, a material (e.g., an oxide-based solid electrolyte, a sulfide-based solid electrolyte, or a halogen-based solid electrolyte) publicly known in an all-solid-state lithium ion secondary battery and the like is used as the inorganic solid electrolyte.

The positive electrode 11 includes a positive electrode core 30, and positive electrode mixture layers 32 formed on the opposite surfaces of the positive electrode core 30. The positive electrode core 30 constitutes a first core, and the positive electrode mixture layers 32 constitute first mixture layers. The positive electrode core 30 may be made of metal foil that is stable in the potential range of the positive electrode 11, such as aluminum or an aluminum alloy, a film on which the metal is disposed as a surface layer, or the like. The positive electrode mixture layer 32 contains a positive-electrode active material, a conductive agent, and a binding agent. The positive electrode 11 can be fabricated by forming the positive electrode mixture layers 32 on the opposite surfaces of the positive electrode core 30 through, for example, applying a positive electrode mixture slurry that contains the positive-electrode active material, the conductive agent, the binding agent, and the like on the positive electrode core 30, drying the applied films, and then compressing them. Note that the positive electrode mixture layer 32 may be formed only on one surface of the positive electrode core 30. The positive electrode mixture layers 32 may be made by pasting sheets each formed in a layered manner to the positive electrode core. In such pasting, a conductive adhesive that contains conductive particles may be interposed between the positive electrode mixture layers 32 and the positive electrode core 30.

The positive-electrode active material has a configuration that contains a lithium-containing metal composite oxide as a principal component. The metal element contained in the lithium-containing metal composite oxide is Ni, Co, Mn, Al, B, Mg, Ti, V, Cr, Fe, Cu, Zn, Ga, Sr, Zr, Nb, In, Sn, Ta, W, or the like. An example of preferable lithium-containing metal composite oxides is a composite oxide that contains at least one of the group consisting of Ni, Co, Mn, and Al.

Examples of the conductive agent contained in the positive electrode mixture layers 32 can include carbon materials, such as carbon black, acetylene black, Ketjenblack, and graphite. Example of the binding agent contained in the positive electrode mixture layers can include fluorine resins such as polytetrafluoroethylene (PTFE) and polyvinylidene fluoride (PVdF), and a polyacrylonitrile (PAN), a polyimide resin, an acrylic resin, and a polyolefin resin. These resins may be used along with a cellulose derivative such as carboxymethylcellulose (CMC) or a salt thereof, polyethylene oxide (PEO), or the like.

The negative electrode 12 includes a negative electrode core 40, and negative electrode mixture layers 42 formed on the opposite surfaces of the negative electrode core 40. The negative electrode core 40 constitutes a second core, and the negative electrode mixture layers 42 constitute second mixture layers. The negative electrode core 40 may be made of metal foil that is stable in the potential range of the negative electrode 12, such as copper or a copper alloy, a film on which the metal is disposed as a surface layer, or the like. The negative electrode mixture layers 42 contain a negative-electrode active material, and a binding agent. The negative electrode 12 can be fabricated by forming the negative electrode mixture layers 42 on the opposite surfaces of the negative electrode core 40 through, for example, applying a negative electrode mixture slurry that contains the negative-electrode active material, the binding agent, and the like on the negative electrode core 40, drying the applied films, and then compressing them. Note that negative electrode mixture layer 42 may be formed only one surface of the negative electrode core 40. Alternatively, negative electrode mixture layers having already been formed in a layered manner may be pasted to the negative electrode core. In such pasting, a conductive adhesive that contains conductive particles may be interposed between the negative electrode core 40 and the negative electrode mixture layers 42.

Typically, a carbon material that can absorb and desorb lithium ions is used as the negative-electrode active material. Preferable carbon materials include graphites that are natural graphites, such as flake graphite, lump graphite, and earthy graphite, and artificial graphites, such as artificial lump graphite, and graphitized mesophase carbon microbeads. The negative electrode mixture layer may contain, as the negative-electrode active material, an Si material that contains silicon (Si). Metal that is other than Si and is alloyed with lithium, an alloy that contains the metal, a compound that contains the metal, or the like may be used as the negative-electrode active material.

Similar to the case of the positive electrode 11, a fluorine resin, PAN, a polyimide resin, an acrylic resin, a polyolefin resin, or the like may be used as the binding agent contained in the negative electrode mixture layers 42. Preferably, styrene-butadiene rubber (SBR) or its derivative is used. The negative electrode mixture layers may contain, for example, CMC or its salt, polyacrylic acid (PAA) or its salt, or polyvinyl alcohol, in addition to SBR or the like.

A porous sheet that has ion permeability and insulating property is used as the separator 13. Specific examples of the porous sheet include a microporous thin-film, a woven fabric, and a non-woven. Preferably, the material of the separators 13 is a polyolefin resin such as polyethylene or polypropylene, cellulose, or the like. The separator 13 may have either a single-layer structure or a laminate structure. A heat-resistant layer or the like may be formed on each of the surfaces of the separators 13.

The battery 10 includes a metal lower current collector plate (negative electrode current collector plate) 18 that is made of copper, iron, nickel, a nickel alloy, or the like lower than the electrode assembly 14 in the axial direction. In the present embodiment, a lower current collector plate 18 includes a disk-shaped base portion 18a, and a closed-bottom-cylindrical-shaped protruding portion 18b that is provided at the center of the base portion 18a and protrudes downward in the axial direction. In a state where the upper surface of the base portion 18a is pressed against the negative electrode exposed portion 41 that constitutes a lower end portion of the electrode assembly 14 in the axial direction, the lower surface of the base portion 18a is irradiated with laser light from below. By the laser welding, the negative electrode exposed portion 41 is joined to the upper surface of the base portion 18a. Furthermore, a bottom plate portion 18c disposed at the distal end of the protruding portion 18b is overlaid on the upper surface of the bottom plate portion 68 of the housing body 16, and subsequently, the bottom plate portion 68 is irradiated with the laser light from below. By the laser welding, the lower current collector plate 18 is joined to the bottom plate portion 68, thus being electrically coupled to the housing body 16. The lower current collector plate (negative electrode current collector plate) 18 constitutes a second current collector plate.

In the drawing, the negative electrode exposed portion 41 has a shape that is bent inward in the radial direction, but may have a shape that is bent inward from the outside in the radial direction instead.

The case where the negative electrode exposed portion 41 is electrically coupled to the housing body 16 via the lower current collector plate 18 has been described. However, the negative electrode may be electrically coupled to the housing body via one or more negative electrode leads that protrude from the lower end portion of the electrode assembly. Alternatively, in addition to or instead of the electrical coupling to the housing body via one or more negative electrode leads, the contact of the negative electrode exposed portion provided on the outermost periphery of the electrode assembly to the inner-peripheral surface of the housing body may electrically couple the negative electrode to the housing body. The negative electrode exposed portion 41 may be directly joined to the bottom plate portion of the housing body by laser or the like. The negative electrode exposed portion 41 may be joined to the lower current collector plate 18 in a state of being bent in the radial direction. Furthermore, in a state where parts of the negative electrode exposed portion 41 arranged in the radial direction are overlaid on each other, the negative electrode exposed portion 41 may be joined to the lower current collector plate 18.

The battery 10 includes an upper current collector plate 19 (positive electrode current collector plate) that is made of metal, such as aluminum or an aluminum alloy, on the upper side of the electrode assembly 14 in the axial direction. The upper current collector plate 19 includes a base portion 19a electrically coupled to the positive electrode 11, and a through-hole 19b provided at the center of the base portion 19a. A spacer 37 that is made of an insulating member for preventing the upper current collector plate 19 and the housing body 16 from being coupled to each other is provided between the base portion 19a and the housing body 16. In a state where the lower surface of the base portion 19a is pressed against a positive electrode exposed portion 31 that constitutes the upper end portion of the electrode assembly 14, the upper surface of the base portion 19a is irradiated with laser light from above. By the laser welding, the positive electrode exposed portion 31 is joined to the lower surface of the base portion 19a. Note that the positive electrode exposed portion 31 constitutes a first exposed portion. The upper current collector plate (positive electrode current collector plate) 19 constitutes a first current collector plate.

Here, the distal end side of the positive electrode exposed portion 31 is bent outward in the radial direction by bending forming, and is joined to the upper current collector plate 19 in the state of being bent in the radial direction. Note that the distal end portion of the positive electrode exposed portion 31 may be bent inward in the radial direction. Furthermore, in a state where parts of the positive electrode exposed portion arranged in the radial direction are overlaid on each other, the positive electrode exposed portion may be joined to the upper current collector plate 19.

A protection layer 33 is formed around an end portion of the positive electrode exposed portion 31 closer to the positive electrode mixture layer 32, thus preventing a short circuit to the adjacent negative electrode 12.

The sealing assembly 17 is made up of a gasket 28 and a terminal cap 27. The terminal cap 27 is made of metal. The terminal cap 27 includes a disk-shaped base portion 27a, and a projection 27b. The projection 27b includes, for example, a cylindrical protrusion. The base portion 27a of the terminal cap 27 may be coupled to the upper surface of the base portion 19a of the upper current collector plate 19 through a strip-shaped lead 55. The method of coupling the lead 55 to the base portion 27a and the base portion 19a may be welding. For example, the terminal cap 27 and the upper current collector plate 19 are electrically coupled to each other by laser welding.

Typically, the housing body 16 is made of metal that contains iron as a principal component, and is made of, for example, a material of nickel-plated iron. The housing body 16 may be made of metal that contains aluminum or the like as a principal component. The housing body 16 contains a cylindrical portion 65 and a bottom plate portion 68. The cylindrical portion 65 includes a ring-shaped groove portion 36, and a ring-shaped shoulder portion 38. The groove portion 36 is formed by applying a spinning process to part of the cylindrical portion 65, and forming a recess inward in the radial direction along the entire periphery in the circumferential direction. The shoulder portion 38 is formed when the upper end portion of the cylindrical portion 65 is bent inward in the radial direction and is crimped to the peripheral portion 48 of the sealing assembly 17, and extends inward in the radial direction at the upper end portion of the cylindrical portion 65.

The peripheral portion 48 of the terminal cap 27 is crimped to be interposed between the shoulder portion 38 and the groove portion 36 via the gasket 28, thus allowing the sealing assembly 17 to be fixed to the housing body 16. The gasket 28 has a role of a sealing material for maintaining the airtightness in the battery, and a role as an insulating material that insulates the housing body 16 and the sealing assembly 17 from each other. The gasket 28 is made of, for example, polyolefin. The groove portion 36 is formed at a position apart from the upper end of the housing body 16 by a predetermined length. The predetermined length corresponds to, for example, a length that is greater than or equal to 1% and less than or equal to 20% of the length of the housing body 16 in the axial direction. The gasket 28 is compressed by the shoulder portion 38. The gasket 28 includes a protruding portion 28a that protrudes inward in the radial direction from between the shoulder portion 38 and the sealing assembly 17.

A thin-wall fragile portion 69 is formed in the bottom plate portion 68. The fragile portion 69 is provided by, for example, forming a circular or C-shaped engraved mark on the lower surface of the bottom plate portion 68. When the battery 10 abnormally generates heat and the internal pressure of the battery 10 increases to a predetermined pressure, the fragile portion 69 fractures, and gas is discharged from the bottom plate portion 68. The discharge of the gas prevents the internal pressure of the battery 10 from excessively increasing to explode the battery 10, and the safety of the battery 10 increases.

The battery 10 further comprises a circular-ring-shaped metal plate 80, and a ring-shaped insulating plate 82 made of an insulating material. The metal plate 80 extends in a substantially radial direction. The metal plate 80 is joined to the upper surface of the shoulder portion 38. The terminal cap 27 to which the positive electrode exposed portion 31 is electrically coupled via the upper current collector plate 19 serves as a positive electrode terminal. The metal plate 80 to which the negative electrode exposed portion 41 is electrically coupled via the lower current collector plate 18 and the housing body 16 serves as a negative electrode terminal. The metal plate 80 is electrically coupled to, for example, a current collector plate (not shown) that electrically couples a plurality of batteries 10 in series or parallel using a tongue portion (lead) of the current collector plate. By such a configuration, the plurality of cylindrical batteries 10 can be easily electrically coupled to the current collector plate.

The insulating plate 82 is interposed between the metal plate 80 and the sealing assembly 17, and insulates the metal plate 80 from the sealing assembly 17. An outer peripheral edge portion of the insulating plate 82 on the outer side in the radial direction may be positioned on the upper side of the protruding portion 28a of the gasket 28, and be in contact with the gasket 28. By such a configuration, the gasket 28 and the insulating plate 82 insulate the metal plate 80 from the sealing assembly 17. The periphery of a hollow portion of the insulating plate 82 includes a cylindrical portion 83 that covers the outer-peripheral surface of the projection 27b of the terminal cap 27. The cylindrical portion 83 is joined to an end portion of a plate-shaped base portion of the insulating plate 82 on the inner side in the radial direction. Note that the battery does not necessarily include the metal plate and the insulating plate.

### "Configuration of Distal End Portion of Positive Electrode"

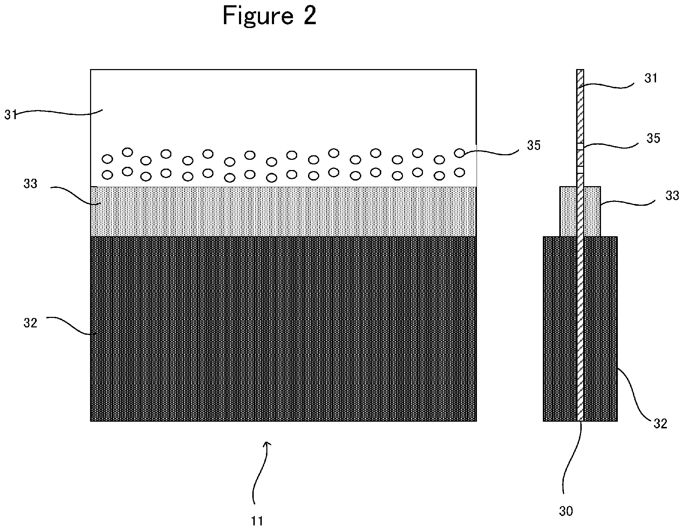

FIG. 2 shows the configuration of a distal end portion of the positive electrode 11. The positive electrode 11 includes the positive electrode core 30, and the positive electrode mixture layers 32 applied to the opposite surfaces of the positive electrode core 30. The positive electrode mixture layers 32 are not formed on the upper end side, which serves as the positive electrode exposed portion 31 where the positive electrode core 30 is exposed. The protection layer 33 is provided on the positive electrode exposed portion 31 at a predetermined distance from the upper end of each positive electrode mixture layer 32. An insulating material that contains water-insoluble polymer and inorganic filler mixed therein is employed as the protection layer 33. Any of alumina (aluminum oxide (Al₂O₃)), silica, zirconia, titania, and other inorganic oxides may be employed as the inorganic filler. To prevent melting during laser welding between the positive electrode core 30 and the upper current collector plate 19, it is preferable to employ the protection layer 33 that has a melting point higher than the positive electrode core 30. Note that the power storage device in the present disclosure may include no protection layer 33.

In the part of the positive electrode exposed portion 31 on its distal end side where no protection layer 33 is formed, a plurality of openings 35 are formed. Such formation of the plurality of openings 35 reduces the stiffness of the corresponding area, thus allowing the positive electrode exposed portion 31 to bend easily. Note that in the positive electrode core, the openings may be formed not only in the positive electrode exposed portion 31 but also in a portion where the positive electrode mixture layer is formed.

In this example, the openings 35 are not formed in a distributed manner entirely in the portion of the positive electrode exposed portion 31 protruding from the protection layer 33. Instead, the openings 35 are formed only in an area that is 1/3 in the width direction. Accordingly, the easily bendable area is restricted to the area where the openings 35 are formed, and desired bending forming can be performed. Note that the openings 35 may be formed in the entire area, or formed only in a center area in the width direction in a strip-shaped manner.

### "Bending Forming"

As shown in FIG. 1, the distal end portion of the positive electrode exposed portion 31 is pressed against the upper current collector plate 19, and is bent inward in the radial direction of the electrode assembly. The bent distal end portion of the positive electrode exposed portion 31 is coupled to the upper current collector plate 19 by laser welding. Note that the positive electrode exposed portion 31 may be tilted outward in the radial direction.

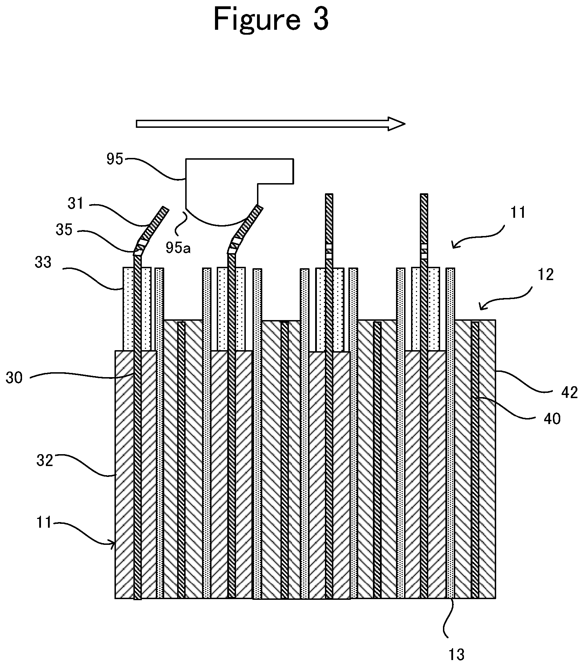

To achieve this, bending forming is performed for the wound electrode assembly 14. FIG. 3 is a diagram illustrating the manner of bending forming. Thus, a jig 95 that has a curved lower surface 95a moves in a state where the jig 95 is pressed against the distal end portion of the positive electrode exposed portion 31. Accordingly, the part of the positive electrode exposed portion 31 on which the protection layers 33 are formed and which is pressed by the jig 95 is bent.

Here, as described above, in a predetermined part of the positive electrode exposed portion 31, the plurality of openings 35 are discretely provided. The strength of the corresponding area is relatively low. Accordingly, as shown in FIG. 3, by bending forming, the bending is performed in the direction of movement of the jig 95 centered at the area provided with the openings 35.

After the bending forming process is performed, the upper current collector plate 19 is irradiated with laser from above in the state where the upper current collector plate 19 is pressed against the bent distal end portion of the positive electrode exposed portion 31. Accordingly, the temperature of the part of the upper current collector plate 19 irradiated with laser increases, and the part is fused. The positive electrode exposed portion 31 in contact with the upper current collector plate 19 is also fused, and both are fused and integrated.

According to the power storage device (battery) in the present embodiment, the distal end portion of the positive electrode exposed portion 31 can be securely bent, the positive electrode exposed portion 31 and the upper current collector plate 19 can be securely joined, and the power storage device with high reliability can be provided.

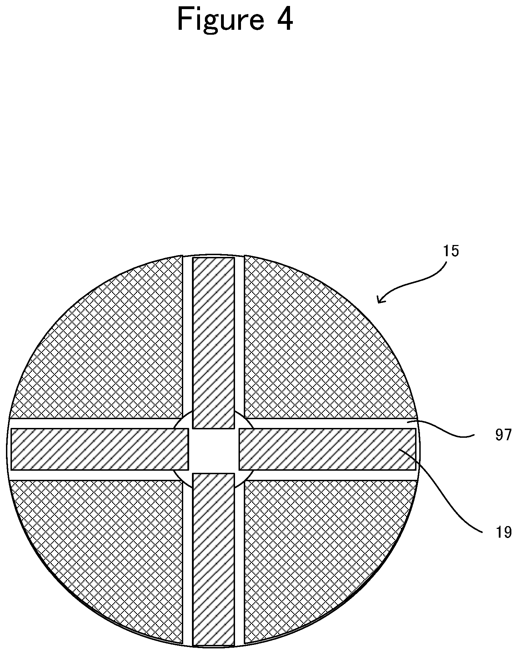

After such bending forming is finished, laser welding is performed in a state where the upper current collector plate 19 is pressed against a groove portion 97 from above. FIG. 4 is a schematic diagram showing a state after the upper current collector plate 19 is laser-welded as viewed from above. Four upper current collector plates 19 are attached to the groove portion 97.

### "Configuration of Opening"

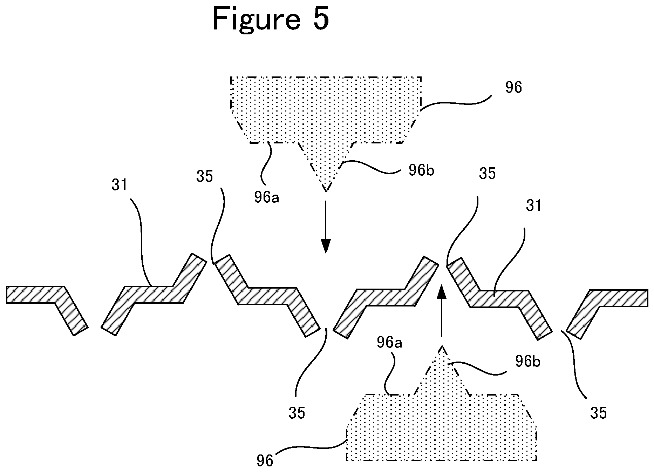

FIG. 5 is a diagram illustrating formation of the openings 35. A die 96 includes a flat portion 96a, and a conical protruding portion 96b that is elevated from the center portion of the flat portion 96a. By pressing such a die 96 against the positive electrode exposed portion 31 of the positive electrode core 30, the protruding portion 96b penetrates through the positive electrode exposed portion 31, thus forming opening 35. The inner-peripheral edges of the openings 35 have a shape that matches the flat portion 96a and the conical protruding portion 96b (a first protruding portion and a second protruding portion), and the openings 35 are formed in the top portions of the protruding parts.

Note that as shown in the diagram, the die 96 may include one flat portion 96a and one protruding portion 96b, or pluralities of these portions. Two dies 96 are pressed from the opposite sides of the positive electrode exposed portion 31, and an opening portion that has a protruding portion (first protruding portion) protruding from a first surface of the positive electrode exposed portion 31, and a protruding portion (second protruding portion) protruding from a second surface that is the reverse side of the first surface are formed, thereby allowing both the pressing forces to cancel each other. By causing the protruding portions to protrude from the opposite surfaces, the distinction between front and back is eliminated, which contributes to easy handling in subsequent processes.

The protruding portion 96b of the die 96 thus penetrates through the positive electrode exposed portion 31, and each opening 35 is formed. In the formation of the openings 35 by such a die, each opening 35 is formed by deformation of its periphery, and occurrence of chips corresponding to the openings 35 can be prevented.

For example, if the openings 35 are formed by a punching process or the like, chips corresponding to the openings 35 occur. In a laser process or the like, sputtered particles are emitted. According to the present embodiment, adverse effects to the electrode assembly 14 due to such remnants can be avoided.

### "Examples of Openings"

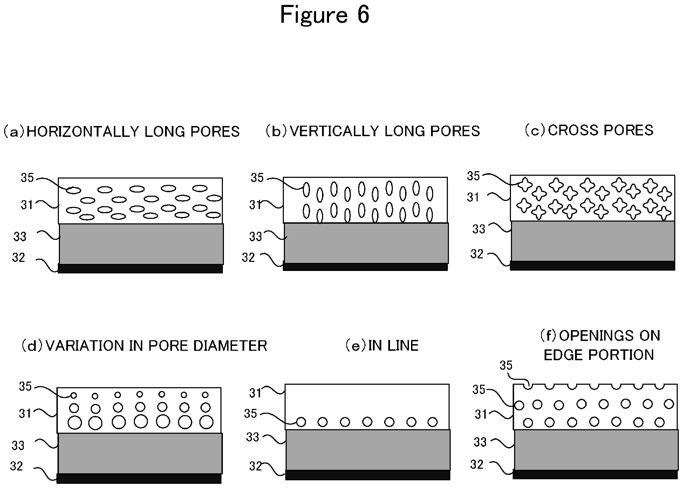

FIG. 6 shows various examples of the openings 35. (a) indicates openings 35 that are horizontally long pores that are horizontally long.
(a) shows an example of openings 35 that are horizontally long pores that are horizontally long.
(b) shows an example of openings 35 that are vertically long pores that are vertically long.
(c) shows an example of openings 35 that are cross pores that have a cross shape.
(d) shows an example where openings 35 with variable diameters are included. In this example, the diameters of openings 35 are larger on the proximal side than on the distal end side. Alternatively, openings 35 with various diameters may be randomly mixed.
(e) shows an example where openings 35 are in line.
(f) shows an example where openings 35 on the distal end side are positioned at the edge portion, and these openings 35 on the distal end side open.

As described above, various modifications are allowed for the openings 35. These modified examples may be combined together as appropriate.

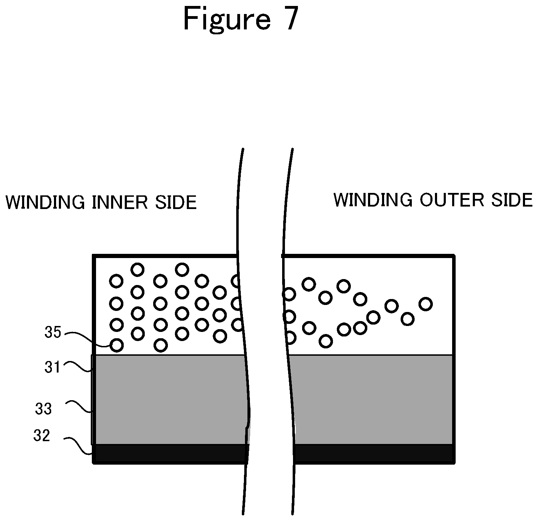

FIG. 7 shows still another example of openings 35. In this example, the openings 35 are densely arranged on the inner-peripheral side (the center side of the electrode assembly 14), and the density of the openings 35 is low on the outer-peripheral side (the outer side of the electrode assembly 14). On the inner-peripheral side of the electrode assembly 14, the positive electrode exposed portion 31 is resistant to deformation. Accordingly, by increasing the density of the openings 35 on the winding inner side, the inner-peripheral side part that is particularly resistant to bending in the positive electrode exposed portion 31, and its outer-peripheral side part can have equivalent deformability. The density of the openings 35 may continuously change, or change in a step-by-step manner. The part of the positive electrode exposed portion 31 on the outer-peripheral side may be provided with no opening, and openings may be provided only in the part on the inner-peripheral side.

### "Manufacturing Process"

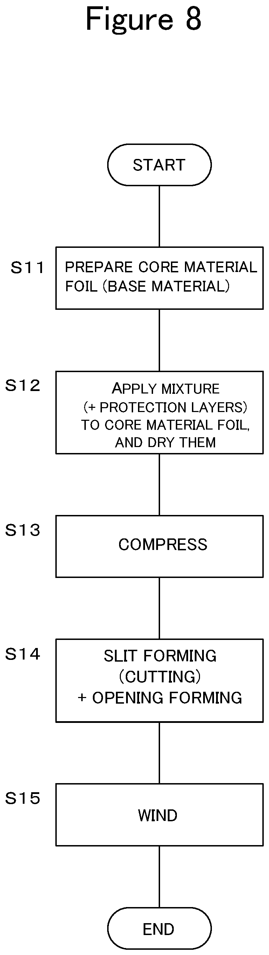

FIG. 8 is a flowchart showing a process of manufacturing the positive electrode 11. First, core material foil (e.g., the base material of the positive electrode core 30) is prepared (S11). Preferably, it is an elongated metal foil roll having a width that is the width of the intended positive electrode core 30.

Next, mixture layers (e.g., the positive electrode mixture layers 32) are formed on the core material foil, and the protection layers (protection layers 33) are formed (S12). These are performed by applying slurry, drying, and the like as described above. The dried mixture layers (positive electrode mixture layers 32) and the like are then compressed and formed (S13).

Subsequently, by forming slits in the elongated core material foil, a length used for one electrode assembly 14 is cut and taken, and the plurality of openings 35 are formed simultaneously with the cutting (S14). The formation of the slits and the formation of the openings 35 may be separately performed, or be simultaneously performed instead. The simultaneous formation can prevent the number of processes from increasing.

As described above, the positive electrode or the negative electrode is formed for one electrode assembly 14. The electrode is wound together with the negative electrode or the positive electrode and the separators, which are separately fabricated, in an overlaid manner, thereby fabricating the electrode assembly 14 (S15).

### "Others"

With the aforementioned embodiment, it is described that the openings 35 are formed in the positive electrode exposed portion 31 of the positive electrode core 30 of the positive electrode 11. However, it is applicable to the negative electrode 12 instead of the positive electrode 11. That is, a plurality of openings 35 may be formed in the negative electrode exposed portion 41 of the negative electrode core 40 of the negative electrode 12. The exposed portion described above is not formed in one electrode that is one of the positive electrode 11 and the negative electrode 12, and the one electrode may be electrically coupled to the sealing assembly or the housing can via a ribbon-shaped lead.

### REFERENCE SIGNS LIST

10 Battery, 11 Positive electrode, 12 Negative electrode, 13 Separator, 14 Electrode assembly, 16 Housing body, 17 Sealing assembly, 18 Lower current collector plate, 18a Base portion, 18b Protruding portion, 18c Bottom plate portion, 19 Upper current collector plate, 19a Base portion, 19b through-hole, 27 Terminal cap, 27a Base portion, 27b Projection, 28 Gasket, 28a Protruding portion, 30 Positive electrode core, 31 Exposed portion, 31 Positive electrode exposed portion, 32 Positive electrode mixture layer, 33 Protection layer, 35 Opening, 36 Groove portion, 37 Spacer, 38 Shoulder portion, 40 Negative electrode core, 41 Negative electrode exposed portion, 42 Negative electrode mixture layer, 48 Peripheral edge portion, 55 Lead, 65 Cylindrical portion, 68 Bottom plate portion, 69 Fragile portion, 80 Metal plate, 82 Insulating plate, 83 Cylindrical portion, 95 Jig, 95a Lower surface, 96 Die, 96a Flat portion, 96b Protruding portion, 97 Groove portion.

## Claims

1. A power storage device, comprising:
an electrode assembly that includes a first electrode and a second electrode, and a separator interposed therebetween; and
a housing body that accommodates the electrode assembly,
wherein the first electrode includes a distal end portion that extends beyond an end portion of the second electrode in a first direction, and the distal end portion is bent and then is coupled to a first current collector plate, and
a plurality of openings are formed in the distal end portion.

2. The power storage device according to claim 1, wherein
the first electrode, the second electrode, and the separator are each strip-shaped, and
the electrode assembly is a coiled electrode assembly in which the first electrode and the second electrode are wound with the separator being interposed therebetween.

3. The power storage device according to claim 1 or 2, wherein
the first electrode includes a strip-shaped first core, and a first mixture layer disposed on the first core,
the second electrode includes a strip-shaped second core, and a second mixture layer disposed on the second core,
on the distal end portion of the first electrode, the first mixture layer is not formed, and a first exposed portion where the first core is exposed is formed,
the first current collector plate and the first exposed portion are joined to each other, and
the plurality of openings are formed in the first exposed portion of the first electrode.

4. The power storage device according to claim 1 or 2, further comprising
a second current collector plate electrically connected to the second electrode, wherein
the second electrode includes a distal end portion that extends beyond an end portion of the second electrode in the first direction, and the distal end portion is coupled to a first current collector plate.

5. The power storage device according to claim 1, wherein the number of openings formed is greater on the inner-peripheral side than on the outer-peripheral side in the distal end portion.

6. The power storage device according to claim 1, wherein
a plurality of protruding portions are respectively formed at the plurality of openings on inner-peripheral edges thereof,
the plurality of protruding portions include first protruding portions that protrude from a first surface at the distal end portion, and second protruding portions that protrude from a second surface and are positioned on a reverse side of the first surface at the distal end portion, and
the plurality of openings include opening portions where the first protruding portions are formed, and opening portions where the second protruding portions are formed.
